# EUROPEAN PATENT SPECIFICATION

(11) **EP 1 912 852 B1**
(45) Date of publication and mention of the grant of the patent: **17.02.2010**
(21) Application number: 06780598.6
(22) Date of filing: 26.07.2006
(51) Int. Cl.: B62D 53/06, B62D 53/08

(54) **LOAD SHIFTING DEVICE FOR AN ARTICULATED VEHICLE**
LASTVERSCHIEBUNGSVORRICHTUNG FÜR EIN GELENKFAHRZEUG
DISPOSITIF DE DÉPLACEMENT DE CHARGES POUR UN VÉHICULE ARTICULÉ

(30) Priority: 04.08.2005 IT BO20050522; 13.04.2006 IT BO20060283
(43) Date of publication of application: 23.04.2008
(73) Proprietor: Studio Tecnico Piazzi di Piazzi Geometra Roberto EC. S.A.S, 44011 Argenta (IT)
(72) Inventor: PIAZZI, Roberto, I-44011 Argenta (IT)
(74) Representative: di Francia, Vincenzo
(86) International application number: PCT/IT2006/000570
(87) International publication number: WO 2007/015283

(56) References cited:
- EP-A- 0 512 862
- DE-U1- 20 306 057
- FR-A- 2 625 472
- FR-A2- 2 606 355
- GB-A- 2 372 490
- US-A- 4 854 407

## Description

### Technical field

The present invention relates to a load shifting device intended for the use in articulated vehicles consisting of a semitrailer and a towing vehicle.

### Background art

It is known that articulated vehicles are currently broadly used, constituted by a semitrailer suited to be drawn on the road by a towing vehicle, otherwise called road tractor. The semitrailer usually provides for a chassis provided with a platform which is suited to be articulated frontally to the road tractor. To be more precise, the platform of the semitrailer is suited to be connected to the road tractor through the articulation of a substantially vertical pin to a centre plate fitted on the chassis of the road tractor.

Such articulated vehicles show in use various drawbacks deriving from load losses of the driving axle of the road tractor or from the scarce grip of the same driving axle in particular climatic conditions. For example the load loss effect involving the driving axle of the road tractor often appears in downhill roads when, because of deceleration, the semitrailer axial thrust causes the lightening of the load weighing on the driving axle. This effect, in case combined with possible conditions of slippery roads, can even cause the grip loss for the entire vehicle. Actually, the worst conditions in which the cited articulated vehicles show their limits are due to roads made highly slippery by snow and ice.

EP-A-0 512 862, on which the preamble of claim 1 is based, discloses a device which is applicable to vehicles comprising a tractor with one or two driving axles which have a fifth wheel for harnessing the semitrailer, with the aim of increasing the load on the driving wheels in order to avoid slippages and which includes the incorporation of a single or double acting hydraulic or pneumatic cylinder, which is fixed on the one hand to the fifth wheel and on the other hand to the chassis of the tractor, in such a way that when the cylinder is activated from the cabin it can activate a swinging of the fifth wheel and determine with it a series of structural stresses which make the load vary on the driving wheels.

Furthermore, patent FR-A-2 625 472 discloses a device for hitching between a towing vehicle and a towed vehicle comprising a hitching pivot carried by the framework of the towed vehicle and engaged and locked into a hitching fifth wheel carried by the framework of the towing vehicle. According to the invention, the hitching pivot is mounted slidingly with respect to the framework of the towed vehicle or alternatively the hitching fifth wheel is mounted slidingly with respect to the framework of the towing vehicle; it includes a hydraulic thrust cylinder for moving the hitching pivot or the hitching fifth wheel and a rotation sensor which is sensitive to the misalignment of the towing and towed vehicles and is suitable for commanding the thrust cylinder so as to move the towing and towed vehicles away from one another in a bend.

### Disclosure of the invention

The aim of the present invention is to overcome the cited drawbacks by devising a device which enables to carry out the shifting of a load share to the articulation pin between towing vehicle and semitrailer, so as to increase the mass adhering on the driving axle of the towing vehicle itself.

Within this scope it is a further aim of the claimed invention to devise a load shifting device of simple conception, reliable functioning and versatile use, as well as easily applicable to the articulated vehicles of known type.

The cited aims are reached according to the claimed invention by a load shifting device according to claim 1.

### Brief description of the drawings

Description details of the invention will be further evident in the illustrations of preferred embodiments of the load shifting device illustrated in the guideline drawings attached, wherein:

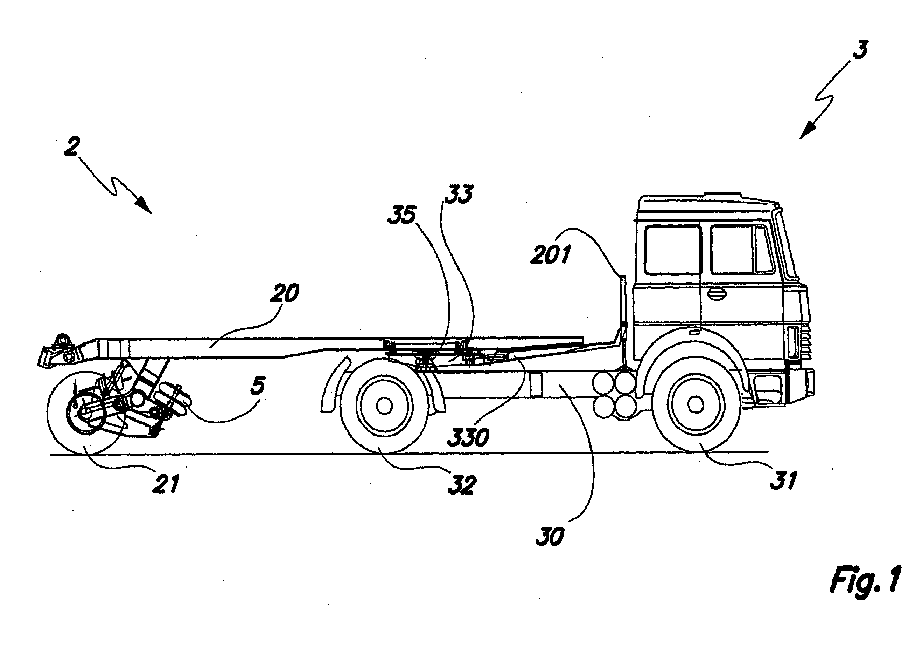

fig. 1 illustrates a side view of an articulated vehicle provided with the claimed load shifting device;

fig. 2 and 3 respectively illustrate a side view of a portion of the semitrailer chassis, by the coupling area with the towing vehicle, according to different embodiments;

fig. 4 and 5 respectively illustrate a side view of a centre plate to fit to the towing vehicle of the road vehicle, according to different embodiments;

fig. 6 illustrates a plan view of the centre plate illustrated in fig. 4;

fig. 7 illustrates a side view of the cited coupling area of the semitrailer chassis to the towing vehicle;

fig. 8 illustrates a functional diagram of the control unit of the load shifting device;

fig. 9 illustrates a side view of an articulated vehicle provided with a load shifting device with a traditional centre plate;

fig. 10 and 11 respectively illustrate a detail side and plan view of an arm for coupling the semitrailer to the towing vehicle, according to the embodiment illustrated in fig. 9;

fig. 12 and 13 respectively show a detail side and plan view of the pulling means of the device in fig. 9;

fig. 14 and fig. 15 illustrate a side view of a vehicle provided with further embodiments of the claimed load shifting device.

### Best mode for carrying out the invention

With reference to such figures, 1 refers to the load shifting device intended for the use in articulated vehicles constituted by a semitrailer 2 suited to be drawn on the road by a towing vehicle 3 otherwise called road tractor.

The semitrailer 2 comprises a chassis 20 provided with a couple of independent wheels 21 at a rear axle. In its turn the road tractor 3 comprises a chassis 30 fitted on wheels 31, 32 respectively at a front axle and a rear axle. The rear axle constitutes the driving axle of the road tractor 3.

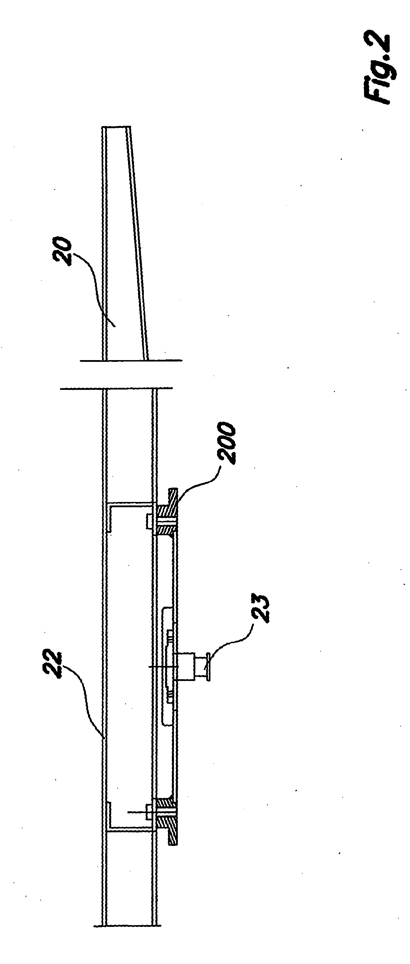

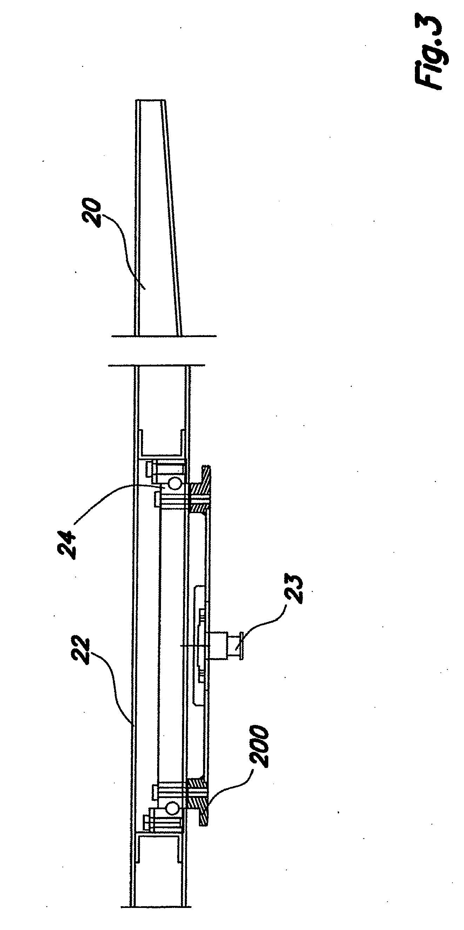

The chassis 20 of the semitrailer 2 is suited to be connected to the road tractor 3 by the articulation of a substantially vertical pin 23 integral with a torque shifting ring 200 which may be made directly integral with the chassis 20 of the semitrailer 2 (fig. 2) or constrained to the latter by the interposition of a fifth wheel 24 (fig. 3) revolving around the same vertical axis of the pin 23 on the platform 22. The articulation pin 23 is intended for coupling with a centre plate 33 fitted on the chassis 30 of the road tractor 3. The centre plate 33 is fitted oscillating, by means of the pins 35, around a substantially horizontal axis transversal to the direction of the vehicle motion.

The centre plate 33 extends longitudinally with suitable shaped portions 330 constituting lever arms which in the front end portion carry anchored vertical actuators 201 which in turn are connected to the chassis 30 of the road tractor 3.

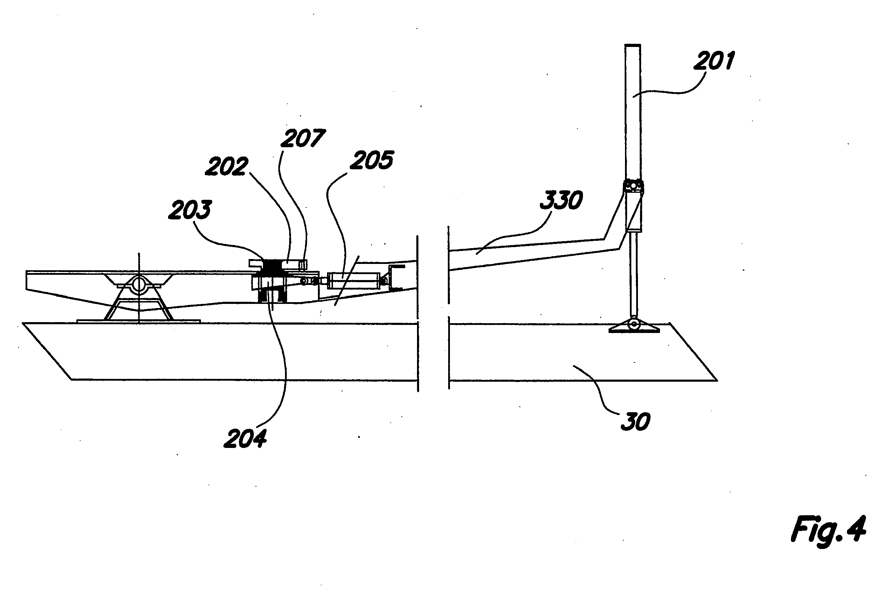

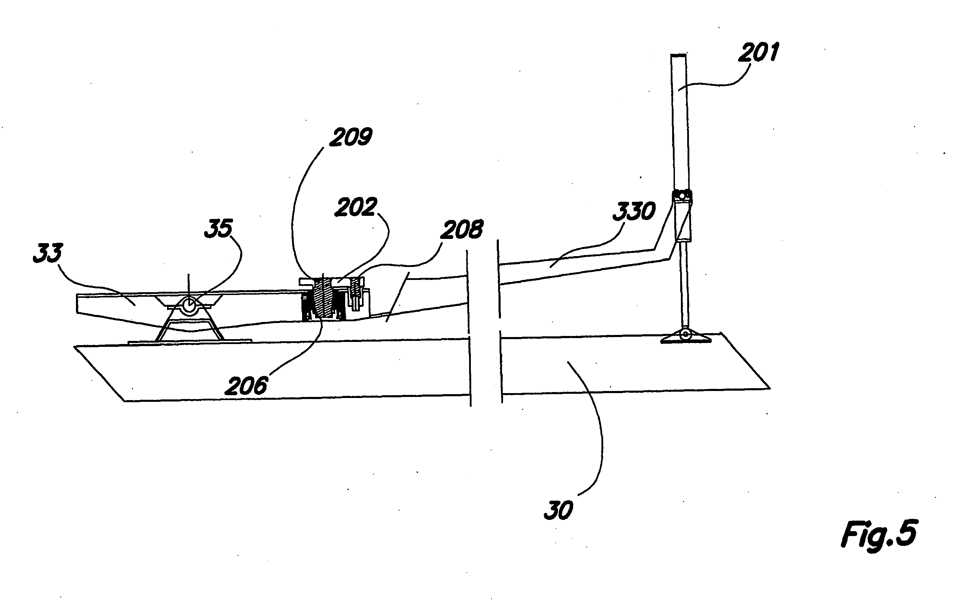

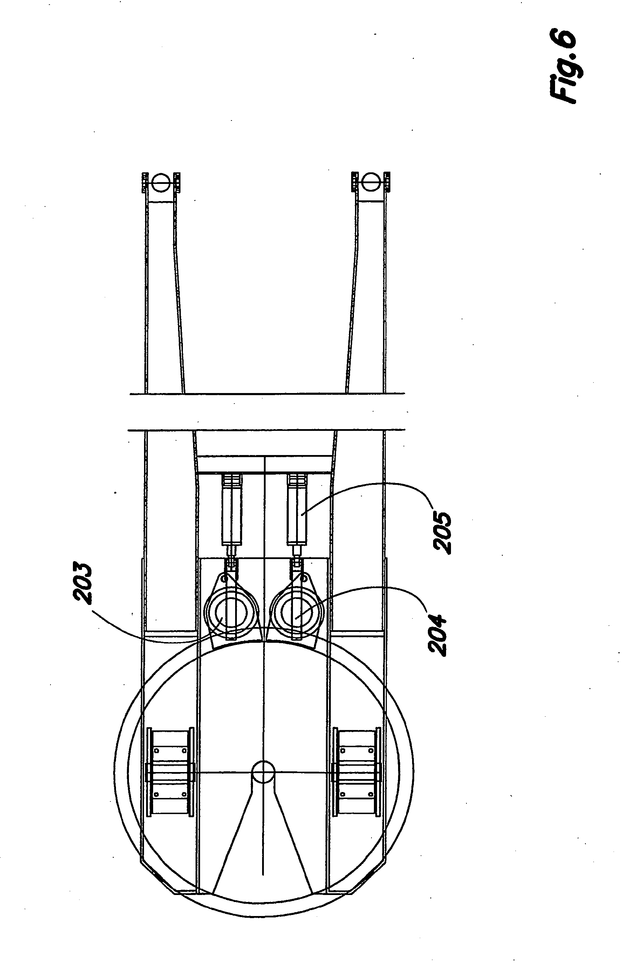

Furthermore contrasting plates 202 are fitted to the centre plate 33 (fig. 4, 5, 6), rigidly connected to a shaft 203, 209 which enables their motion on a vertical axis. The contrasting plates 202 are vertically movable by means of a wedge-shaped bar 204 with actuator 205 (fig. 4 and 6) or by means of a specially provided hydraulic actuator 206 (fig. 5). During the phase of pairing of the semitrailer 2 to the road tractor 3, the vertical operation of the contrasting plates 202 enables the insertion of the external lip of the load shifting ring 200 inside the contrasting plate 202; during the operational phase of the load shifting device, the vertical operation of the contrasting plates 202 makes the load shifting ring 200 integral with the centre plate 33.

The functional use of the contrasting plates 202 depends on the specific connection between the load shifting ring 200 and the chassis 20 of the semitrailer 2. If the load shifting ring 200 is anchored by the revolving fifth wheel 24, the contrasting plates 202 have the function to rigidly block the load shifting ring 200, since the horizontal rotation between the semitrailer 2 and the road tractor 3 takes place by means of this revolving fifth wheel 24. On the contrary if the load shifting ring 200 is directly anchored to the chassis 20 of the semitrailer 2, the contrasting plates 202 have to be positioned in tight contact with the external lip of the ring 200 and tightened at the maximum stress by using suitable adjusting screws 207 (fig. 4 and 5). As described in detail later on , this enables to exert the torque shifting action from the centre plate 33 to the chassis 20 of the semitrailer 2, as well as the rotation of the pin 23 within the centre plate 33 and of the contrasting plates 202 on the external lip of the ring 200. The radial forces generating on the contrasting plates 202 during said rotations are absorbed by the wedge-shaped bar 204 (fig. 4) or by a pin 208 integral with the contrasting plate 202 (fig. 5).

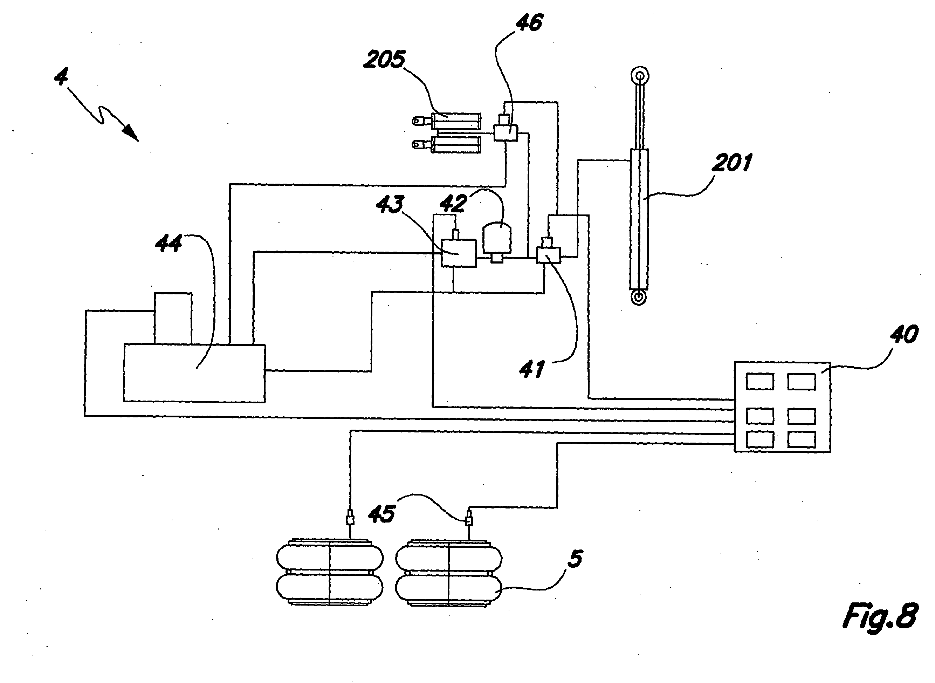

The actuators 201 are intended to be operated by a control hydraulic circuit 4 illustrated in fig. 8. The hydraulic circuit 4 is controlled by a control unit 40 positioned on the road tractor 3.

To be more precise, the control hydraulic circuit 4 comprises a pressure reducer 41 with proportional operation, which is suited to maintain the pressure of the actuator 201 constant, depending on the adjustments managed by the control unit 40. The pressure hydraulic fluid is stored at the maximum pressure in an accumulator 42; so that the actuators 201 are able to realize more linear and immediate displacements. The maintenance of such pressure is managed by a valve 43 which operates an electric-hydraulic control unit 44 or alternatively another assembly suited to supply a suitable hydraulic pressure, whenever the pressure in the accumulator 42 lowers.

Furthermore the control hydraulic circuit 4 comprises means suitable for detecting the mass existing on the driving axle of the road tractor 3, preferably constituted by suitable transducers 45 acting on the pneumatic suspensions 5 of the driving axle. Obviously the use of different types of detecting means is possible, such as load cells or other. These detecting means too are managed by the control unit 40.

The functioning of the load shifting device according to the invention is described as follows.

When required, the semitrailer 2 is coupled to the road tractor 3 by the articulation pin 23. During the coupling phase between the road tractor and the semitrailer, the centre plate 33 is maintained in a middle lifted position, for example by means of suitable elastic means of pneumatic, hydraulic or mechanical type, which are not illustrated. By reversing the road tractor 3, the upper plane of the arms of the centre plate 33 comes in contact with the lower portion of the chassis 20 of the semitrailer 2, thus causing the angular adjustment of the same centre plate 33.

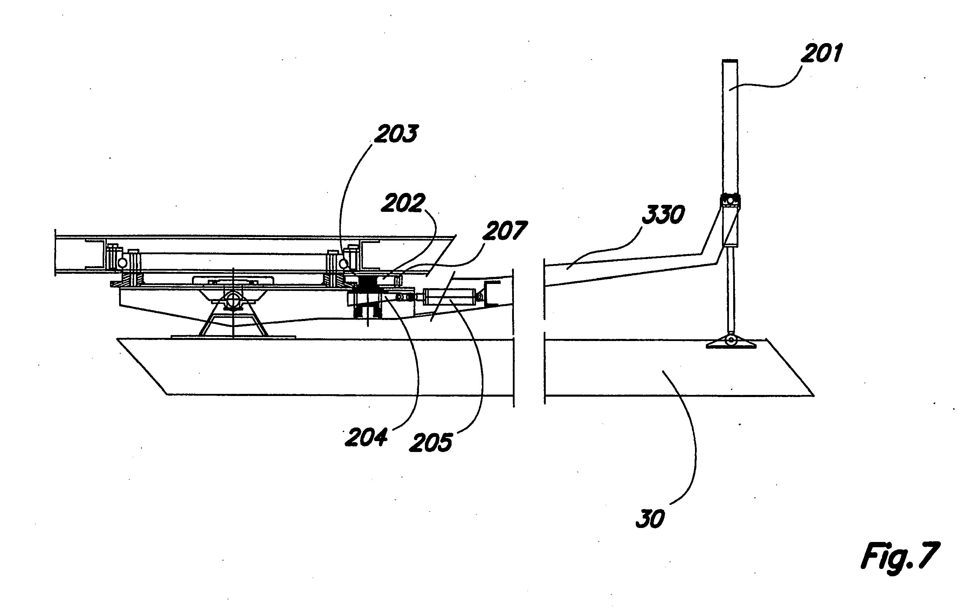

The coupling of the semitrailer 2 with the road tractor 3 ends when the articulation pin 23 is inserted in the centre plate 33 and the lip of the load shifting ring 200 is inserted under the contrasting plates 202 (fig. 7). The rotations on the horizontal plane between semitrailer 2 and road tractor 3 take place in the ways previously described. On the contrary the rotation on the vertical plane takes place about the pins 35 of the centre plate 33 of the road tractor 3.

If, during the use, it is necessary to balance the load losses of the driving axle, generated for example by a downhill road stretch causing consequently an axial push exerted by the semitrailer, the load shifting device is activated by means of a specially provided on button positioned on the control unit 40.

In order to automatically carry out the balancing of the load losses, the load shifting device provides for detecting preventively the value of the actual mass acting on the driving axle of the road tractor by means of the cited transducers 45. The signal relating to the actual mass on the driving axle is managed and processed by the control unit 40 upon operation of a specially provided load storage button. In practice, if the automatic balancing of the load losses is chosen, by operating the cited button a reference pressure is stored, corresponding to the average between the values detected on the suspensions 5 of the driving axle of the road tractor. Whenever a load loss on the driving axle is generated, the control unit 40 detects a deviation from the reference pressure from the transducers 45 and operates the opening of the valve 43 which activates the load shifting by means of the actuators 201.

This adjustment allows to shift a determined rate of the load distributed on the platform 22 of the semitrailer 2 and on the chassis 30 of the road tractor 3 towards the articulation pin 23 coupled with the centre plate 33 and consequently onto the driving axle of the road tractor itself, thus enabling the vehicle altogether to increase the adherence at the driving axle.

The load shifting stops when the actual pressure goes back near the reference pressure. Vice versa when the load goes back to the original value, the actual pressure appears higher than the reference pressure, so the load transfer is reduced until the two pressure values come back within the programmed tolerance.

In a substantially similar way the load shifting device provides for increasing the mass adhering on the driving axle in conditions of scarce adherence, for example on roads covered with snow or ice. In this case too, the pressure value is detected on the suspensions 5 of the driving axle of the road tractor by means of the transducers 45 and the reference pressure value is stored. The reference pressure value may be increased, in such case, or alternatively decreased by means of a corresponding button positioned on the control unit 40. The new reference pressure value so determined is reached and maintained as specified above. In practice, the maximum load which may be shifted, as fixed by the manufacturer, is suitable for use when the vehicle is unloaded; on the contrary when the articulated vehicle is loaded or partially loaded, the maximum value of load which may be shifted is automatically limited for not overcoming a fixed maximum value on the driving axle.

Furthermore the load shifting device may act as an anti-pitching damper automatically operated by switching on the control unit 40. In this case the pressure reducer 41 is activated, which maintains constant the pressure in the actuators 201 by means of a constant or default signal. The switching on of the control unit 40 acts on a valve 46 so as to send the oil at the maximum pressure to the actuators 205 (fig. 4) or 206 (fig. 5).

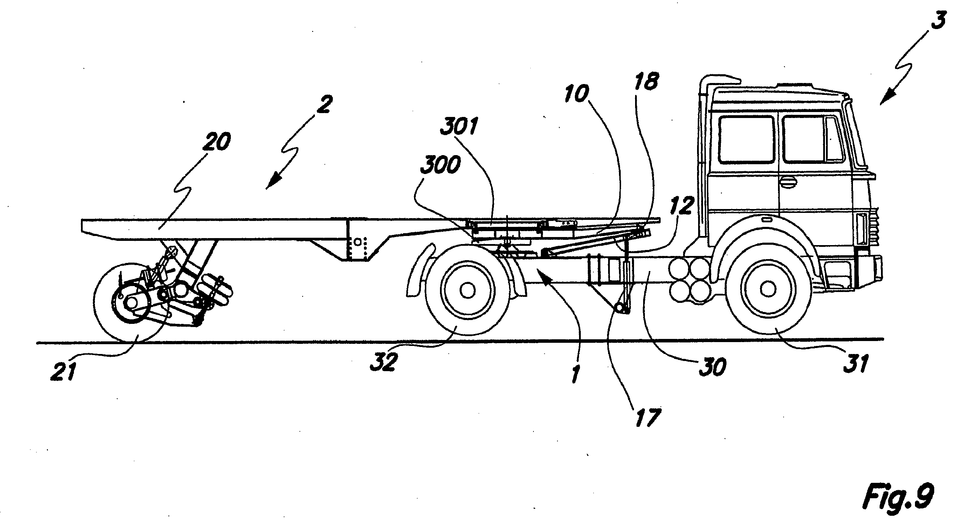

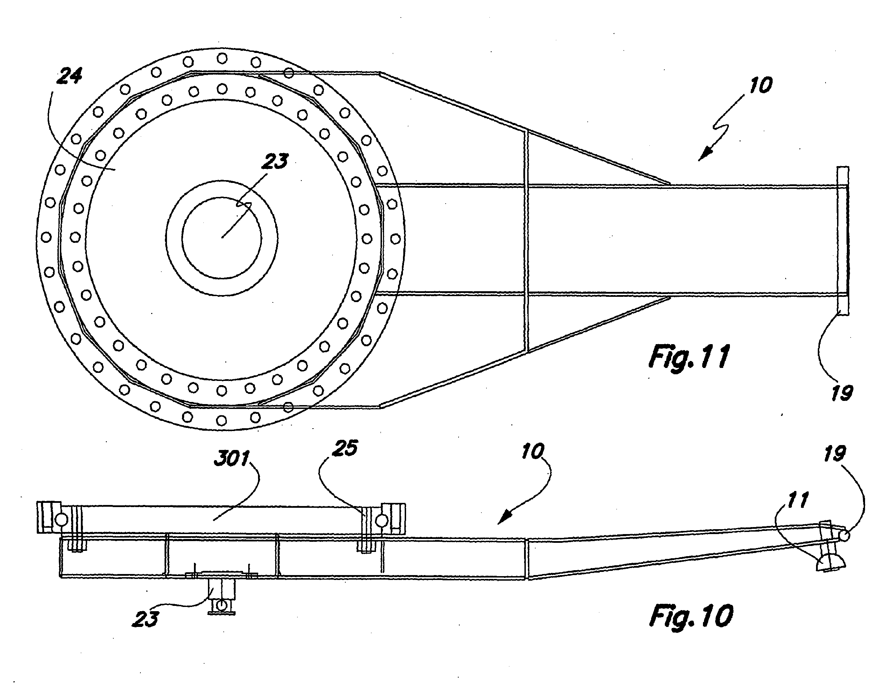

Fig. 9, 10, 11, 12 and 13 illustrate a different embodiment of the load shifting device which allows the use of a centre plate 300 of traditional type. In this case a coupling arm 10 is made integral with the fifth wheel 301, which extends longitudinally under the front part of the chassis 20, substantially radial as to the fifth wheel 301 itself. To be more precise, as it is illustrated in detail in fig. 10 and 11, the arm 10 is constituted by a box-shaped beam fixed by means of suitable screws 25 to the fifth wheel 301.

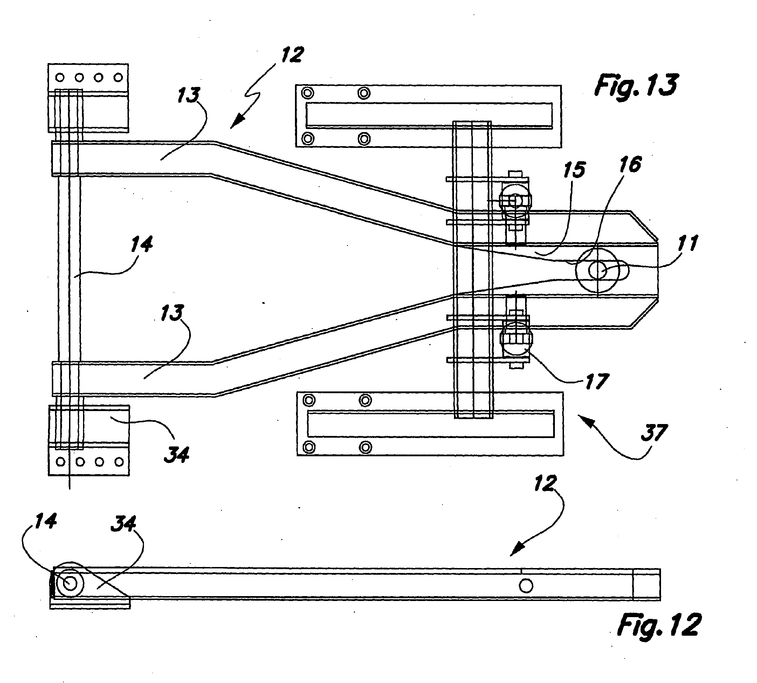

The arm 10 carries a coupling pin 11 at its front end, having a substantially vertical axis, suited to engage a pulling lever 12 fitted on the chassis 30 of the road tractor 3, oscillating about a substantially horizontal axis transversal to the direction in which the vehicle moves. To be more precise, as illustrated in fig. 12 and 13 in detail, the pulling lever 12 is constituted by two branches 13 suitably shaped according to a convergent profile, constrained at a rear end to a shaft 14 pivoted on revolving supports 34 and defining the oscillating axis for the lever 12; at the front end the convergent branches 13 of the lever 12 are reciprocally joined at a guide portion 15 which defines the coupling seat 16 for the coupling pin 11.

On the pulling lever 12 are suited to act actuators 17 constrained to the chassis 30 of the road tractor 3, with a substantially vertical axis. The actuators 17 are preferably constituted by a couple of hydraulic cylinders fitted side by side on a supporting frame 37 fixed to the road tractor 3 and articulated to the branches 13 of the lever 12 by means of respective hinges 18.

Furthermore the arm 10 carries a slide pin 19 at its front end, with a substantially horizontal axis, suited to engage the upper plane of the pulling lever 12 in process of coupling of the semitrailer 2 with the road tractor 3.

It is worth noting that the rotation on the horizontal plane between the road tractor and the semitrailer takes place on the fifth wheel 301 carried revolving on the chassis 20, unlike the current known art, according to which such revolving takes place on the underlying centre plate of the road vehicle.

The device according to the claimed invention reaches the aim to carry out the shift of a load rate to the articulation pin between the towing vehicle and the semitrailer, so as to increase the mass rate adhering on the driving axle of the towing vehicle itself. An essential prerogative of the device is to maintain constant the required load shift, although maintaining unchanged the mutual rotations, horizontal and vertical, of semitrailer and road tractor.

The essential functions carried out by the load shifting device are substantially to maintain the same pressure of the actuators 201, 17 during the rotational travels between semitrailer 2 and road tractor 3; to enable a rapid activation of the actuators 17, 201 themselves; to control the operational pressure of the actuators 17, 201 depending on the different required functions. In particular a fixed or default pressure is required for the anti-pitching damper function, a variable pressure for balancing automatically the load losses on the driving axle of the road vehicle, an adjustable pressure for increasing the load on the driving axle in order to increase the adhering mass.

The whole load shifting device (actuators, load shifting arm and hydraulic control unit) is preferably fitted on the semitrailer 2 for operational and functional reasons.

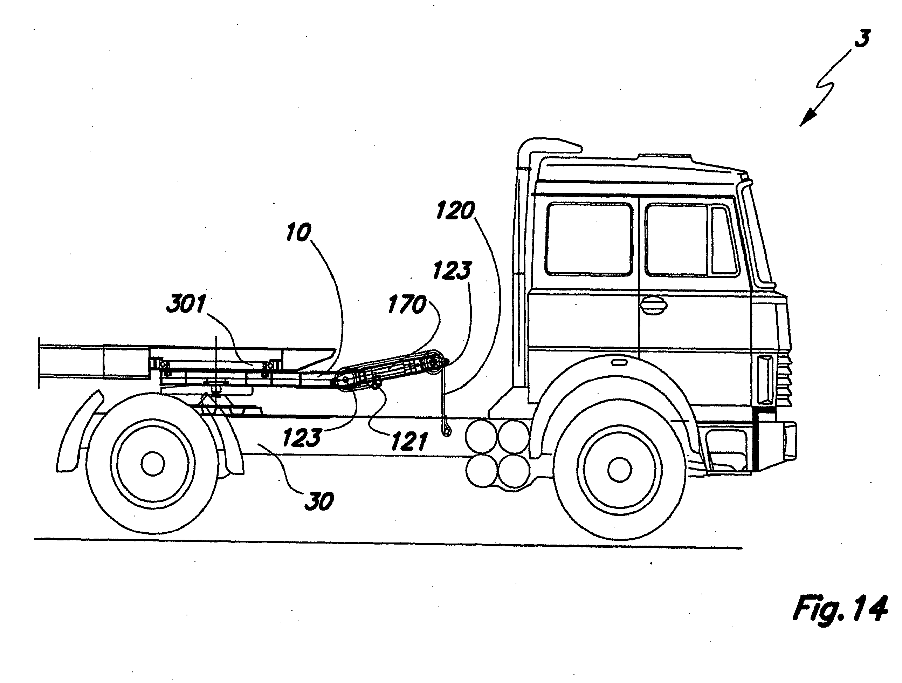

In fig. 14. a different embodiment of the load shifting device is illustrated, in which the coupling arm 10 of the semitrailer is constrained to the chassis 30 of the road tractor 3 by means of a pulling rope 120 operated by respective actuators 170 fitted on said coupling arm 10. To be more precise, the pulling rope 120 is fixed at one end to the chassis 30 of the road tractor 3 and is fastened on the coupler 121 of the arm 10. Furthermore the pulling rope 120 is partially wound around a couple of pulleys 123 respectively associated with said actuators 170, constituted for example by a conventional hydraulic cylinder; the pulleys 123 are carried revolving respectively by the body and the stem of the hydraulic cylinder. Obviously the hydraulic cylinder 170 enables to modulate the tensioning of the pulling rope 120, upon operation of the control hydraulic circuit 4.

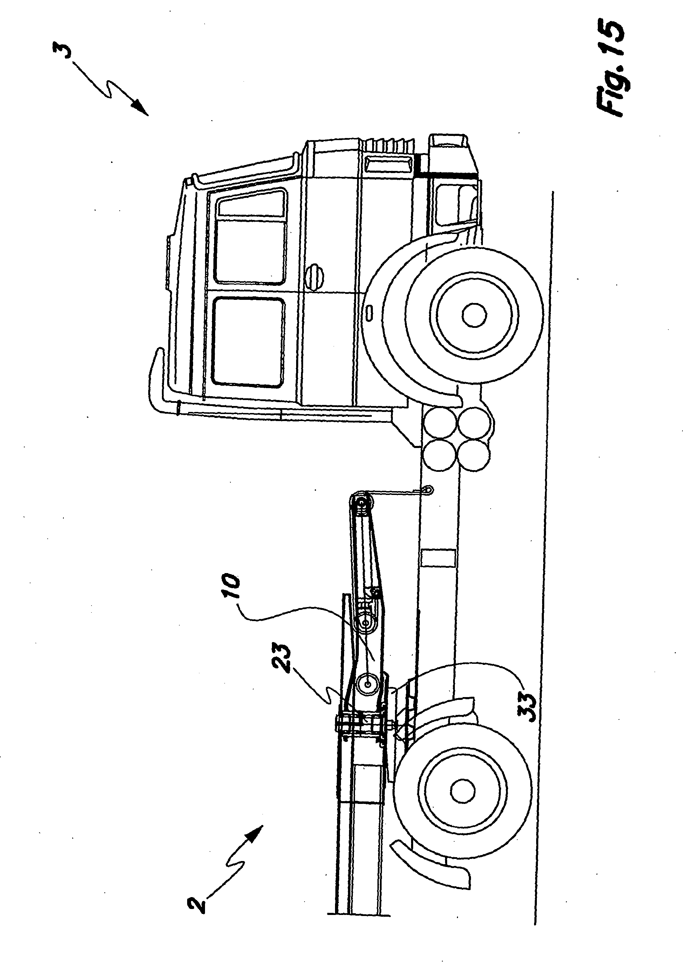

In fig. 15 a further embodiment of the load shifting device is illustrated, similar to the one previously described, in which the arm 10 is not constrained to the chassis 20 of the semitrailer 2 by means of the fifth wheel but by means of the same pin 23, suitably realized, used for the coupling of the semitrailer 2 to the centre plate 33 of the road tractor 3.

The solutions illustrated in fig. 14 and 15 do not allow the automatic coupling of the load shifting device, but this coupling is manually carried out thanks to the coupling of the articulation pin 23 of the semitrailer 2 to the centre plate 33 of the road tractor 3.

Materials adopted for the actual realization of the invention, as well as their shapes and sizes, can be various, depending on the requirements.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. Load shifting device intended for the use in an articulated vehicle constituted by a semitrailer (2) and by a towing vehicle (3) suited to be constrained together by the articulation of a substantially vertical pin (23), comprising:
a ring (200, 301) carried on the chassis (20) of said semitrailer (2) about the same vertical axis as said articulation pin (23), and carrying integral the same pin (23);
a centre plate (33, 300) fitted oscillating on the chassis (30) of said towing vehicle (3) about a substantially horizontal axis transversal to the direction of the motion of the vehicle, and suited to couple with said articulation pin (23);
coupling means (10, 202 ) suited to constrain said ring (200, 301) to moving means (12, 120, 330) controlled by actuators (17, 170, 201) associated with said chassis (30) of the towing vehicle (3);
control means (4) suited to operate said actuators (17, 170, 201) of the moving means (12, 120, 330) in order to carry out the controlled transfer of a corresponding rate of the load distributed on said semitrailer (2) and on said towing vehicle (3) to said articulation pin (23), so as to increase the mass adhering on the driving axle of the towing vehicle (3) itself;
**characterized in that** said moving means comprise a pulling lever (12) fitted on said chassis (30) of the towing vehicle (3) in an oscillating way about a substantially horizontal axis transversal to the direction of the motion of the vehicle and suited to couple with a coupling pin (11) carried by a coupling arm (10) integral with said ring (301);
and **in that** said pulling lever (12) is constituted by two branches (13) suitably shaped according to a convergent profile, reciprocally joined at a front guide portion (15) suited to define a coupling seat (16) for said coupling pin (11).

2. Device according to claim 1, **characterized in that** said pulling lever (12) is stressed by elastic means suited to cause a lifted angular position of the lever (12) itself.

3. Device according to claim 1, **characterized in that** said coupling arm (10) extends longitudinally under the front portion of said chassis (20) of the semitrailer (2), in a substantially radial way as to said ring (301).

4. Device according to claim 3, **characterized in that** said coupling arm (10) carries said coupling pin (11) at its front end, suited to engage a corresponding coupling seat (16) defined by said pulling lever (12).

5. Device according to claims 1 and 3, **characterized in that** said coupling arm (10) carries a slide pin (19) at its front end, with substantially horizontal axis, suited to engage the upper plane of the pulling lever (12) during the coupling phase of said semitrailer (2).

6. Device according to claim 1, **characterized in that** said ring (200, 301) is carried revolving on said chassis (20) of the semitrailer (2) about said vertical axis of said articulation pin (23).

7. Device according to claim 1, **characterized in that** said control means (4) suited to operate said actuators (17, 170, 201) of the moving means (12, 120, 330) comprise a hydraulic circuit controlled by a control unit (40) positioned on said towing vehicle (3).

8. Device according to claim 7, **characterized in that** said hydraulic circuit (4) comprises a pressure reducer (41) with proportional operation, suited to maintain constant the pressure in said actuators (17, 170, 201); an accumulator (42) in which the pressure hydraulic fluid is stored at the maximum pressure; a valve (43) suited to activate an electric-hydraulic control unit (44) when the pressure in said accumulator (42) lowers.

9. Device according to claim 7, **characterized in that** said hydraulic circuit (4) comprises means suited to detect the mass weighing on the driving axle of the towing vehicle (3).

10. Device according to claim 9, **characterized in that** said means suited to detect the mass weighing on the driving axle of said towing vehicle (3) are constituted by transducers (45) acting on the pneumatic suspensions (5) of said driving axle.

11. Device according to claim 1, **characterized in that** said actuators (17, 201) are constituted by hydraulic cylinders fitted on a supporting frame (37) fixed to the towing vehicle (3).

## Patentansprüche

1. Vorrichtung zum Lastumsetzen für den Einsatz auf einem Sattelmotorfahrzeug, die aus einem Auflieger (2) und einer Zugmaschine (3) besteht, die mit einem substantiell vertikalen Bolzengelenk (23) verbunden werden können, bestehend aus:
einem Ring (200, 301) auf einem Rahmen (20) des Aufliegers (2), gemäß der vertikalen Achse des Gelenkbolzens (23) und fest verbunden mit dem Bolzen selbst (23);
eine Aufsattelplatte (33, 300), schwenkbar auf dem Rahmen (30) der Kraftmaschine (3) verbaut, gemäß einer Achse, die substantiell horizontal und
quer zur Bewegungsrichtung des Fahrzeugs liegt und in der Lage ist, sich an den Gelenkbolzen (23) anzukoppeln;
Kupplungsmittel (10, 202) zur Verbindung des Rings (200, 301) mit Beförderungsmitteln (12, 120, 330), die von mit Rahmen (30) der Kraftmaschine (3) verbundenen Triebelementen (17, 170, 201) gesteuert werden;
Steuermittel (4) zur Betätigung der Triebelemente (17, 170, 201) der Beförderungsmittel (12, 120, 330), um das gesteuerte Umsetzen eines entsprechenden Teils der auf dem Auflieger (2) und auf der Kraftmaschine (3) auf Höhe des Gelenkbolzens (23) verteilten Last vorzunehmen, um auf diese Weise das Betriebsleergewicht auf der Triebachse der Kraftmaschine (3) zu erhöhen;
**dadurch gekennzeichnet, dass** die Beförderungsmittel einen Zughebel (12) umfassen, der auf dem Rahmen (30) der Kraftmaschine (3) schwenkbar verbaut ist gemäß einer Achse, die substantiell horizontal und quer zur Bewegungsrichtung des Fahrzeugs liegt und in der Lage ist, sich an einen Kupplungsbolzen (11), der von einem fest mit dem Ring (301) verbundenen Kupplungsarm (10) getragen wird, anzukoppeln;
und dass dieser Zughebel (12) aus zwei entsprechend mit konvergierenden Profil geformten Armen (13) besteht, die auf Höhe eines vorderen Teils (15) einer Führung, die den Sitz (16) für die Kupplung an den Kupplungsbolzen (11) bildet, miteinander verbunden sind.

2. Vorrichtung nach Patentanspruch 1, **dadurch gekennzeichnet, dass** der Zughebel (12) durch elastische Mittel beaufschlagt wird, die diesen Hebel (12) in eine angehobene Winkelstellung bringen.

3. Vorrichtung nach Patentanspruch 1, **dadurch gekennzeichnet, dass** der Kupplungsarm (10) längs unterhalb des vorderen Teils des Rahmens (20) des Aufliegers (2) substantiell radial zum Ring (310) verläuft.

4. Vorrichtung nach Patentanspruch 3, **dadurch gekennzeichnet, dass** der Kupplungsarm (10) am vorderen Ende den Kupplungsbolzen (11) trägt, der sich in den entsprechenden, vom Zughebel (12) definierten Kupplungssitz (16) einfügt.

5. Vorrichtung nach den Patentansprüchen 1 und 3, **dadurch gekennzeichnet, dass** der Kupplungsarm (10) am vorderen Ende einen Schlittenbolzen (19) trägt, mit substantiell horizontaler Achse zu ihnen, der in der Kupplungsphase des Aufliegers (2) die obere Ebene des Zughebels (12) angreift.

6. Vorrichtung nach Patentanspruch 1, **dadurch gekennzeichnet, dass** der Ring (200, 301) drehbar auf dem Rahmen (20) des Aufliegers (2) angebracht ist, gemäß der vertikalen Achse des Gelenkbolzens (23).

7. Vorrichtung nach Patentanspruch 1, **dadurch gekennzeichnet, dass** die Steuerungsmittel (4) zur Betätigung der Triebelemente (17, 170, 201) der Beförderungsmittel (12, 120, 330) einen Hydraulikkreis umfassen, der über ein in der Kraftmaschine (3) untergebrachtes Steuergerät (40) gesteuert wird.

8. Vorrichtung nach Patentanspruch 7, **dadurch gekennzeichnet, dass** der Hydraulikkreis (4) einen Proportionalregler zur Druckminderung (41) umfasst, der den Druck in den Triebelementen (17, 201) konstant hält; eine Speichervorrichtung (42), in der die unter Druck stehende Hydraulikflüssigkeit unter höchstem Druck gelagert wird; ein Ventil (43) zur Aktivierung des elektrohydraulischen Steuergeräts (44) zur Druckreduzierung in der Speichervorrichtung (42).

9. Vorrichtung nach Patentanspruch 7, **dadurch gekennzeichnet, dass** der Hydraulikkreis (4) geeignete Mittel zur Feststellung der auf der Triebachse der Kraftmaschine (3) vorhandenen Masse umfasst.

10. Vorrichtung nach Patentanspruch 9, **dadurch gekennzeichnet, dass** die Mittel zur Feststellung der auf der Triebachse der Kraftmaschine (3) vorhandenen Masse aus Messgebern (45) bestehen, die auf die Pneumatikaufhängung (5) der Triebachse einwirken.

11. Vorrichtung nach Patentanspruch 1, **dadurch gekennzeichnet, dass** die Triebelemente (17, 201) aus Hydraulikzylindern bestehen, die auf einen Stützrahmen (37) montiert sind, der an der Kraftmaschine (3) befestigt ist.

## Revendications

1. Dispositif de déplacement de charges, destiné à un usage dans un véhicule articulé constitué d'une semi-remorque (2) et d'un véhicule tracteur (3) aptes à être liés ensemble par l'articulation d'une épingle (23) essentiellement verticale, comprenant:
un anneau (200, 301) porté sur le châssis (20) de ladite semi-remorque (2) autour du même axe vertical que ladite épingle d'articulation (23), et portant solidairement la même épingle (23);
une plaque centrale (33, 300) montée oscillante sur le châssis (30) dudit véhicule tracteur (3) autour d'un axe essentiellement horizontal transversal à la direction du mouvement du véhicule, et apte à s'accoupler à ladite épingle d'articulation (23);
des moyens d'accouplement (10, 202) aptes à lier ledit anneau (200, 301) à des moyens de traction (12, 120, 330) contrôlés par des membres actionneurs (17, 170, 201) associés audit châssis (30) du véhicule tracteur (3);
des moyens de commande (4) aptes à activer lesdits membres actionneurs (17, 170, 201) des moyens de traction (12, 120, 330) pour opérer le transfert contrôlé d'une vitesse correspondante de charge distribuée sur ladite semi-remorque (2) et sur ledit véhicule moteur (3) à ladite épingle d'articulation (23), de manière à augmenter la masse adhérant sur l'axe moteur du véhicule tracteur (3) même;
**caractérisé en ce que** lesdits moyens de traction comprennent un levier de traction (12) monté sur ledit châssis (30) du véhicule tracteur (3) de façon oscillante autour d'un axe essentiellement horizontal transversal à la direction de mouvement du véhicule et apte à s'accoupler avec une épingle d'accouplement (11) portée solidaire audit anneau (301) par le bras d'accouplement (10);
**et en ce que** ledit levier de traction (12) est constitué de deux branches (13) profilées de façon appropriée selon un profil convergent, joints réciproquement à une portion antérieure (15) de guidage apte à définir un siège d'accouplement (16) pour ladite épingle d'accouplement (11).

2. Dispositif selon la revendication 1, **caractérisé en ce que** ledit levier de traction (12) est sollicité par des moyens élastiques aptes à provoquer une position angulaire soulevée du levier (12) même.

3. Dispositif selon la revendication 1, **caractérisé en ce que** ledit bras d'accrochage (10) s'étend longitudinalement sous la portion antérieure dudit châssis (20) de la semi-remorque (2), de façon essentiellement radiale audit anneau (301).

4. Dispositif selon la revendication 3, **caractérisé en ce que** ledit bras d'accouplement (10) porte ladite épingle d'accouplement (11) à son extrémité antérieure, apte à engager un siège d'accouplement (16) correspondant défini par ledit levier de traction (12).

5. Dispositif selon les revendications 1 et 3, **caractérisé en ce que** ledit bras d'accouplement (10) porte une épingle chariot (19) à son extrémité antérieure, avec un axe essentiellement horizontal, apte à engager le plan supérieur du levier de traction (12) durant la phase d'accrochage de ladite semi-remorque (2).

6. Dispositif selon la revendication 1, **caractérisé en ce que** ledit anneau (200, 301) est porté rotatif sur ledit châssis (20) de la semi-remorque (2) autour dudit axe vertical de ladite épingle d'articulation (23).

7. Dispositif selon la revendication 1, **caractérisé en ce que** lesdits moyens de commande (4) aptes à activer lesdits actionneurs (17, 170, 201) des moyens de traction (12, 120, 330) comprennent un circuit hydraulique commandé par une unité de commande (40) positionnée sur ledit véhicule tracteur (3).

8. Dispositif selon la revendication 7, **caractérisé en ce que** ledit circuit hydraulique (4) comprend un réducteur de pression (41) avec opération proportionnelle, apte à maintenir constante la pression dans lesdits actionneurs (17, 170, 201); un accumulateur (42) dans lequel le fluide de pression hydraulique est stocké à la pression maximum ; une soupape (43) apte à activer une unité de commande électrique-hydraulique (44) quand la pression dans ledit accumulateur (42) diminue.

9. Dispositif selon la revendication 7, **caractérisé en ce que** ledit circuit hydraulique (4) comprend des moyens aptes à détecter la masse pesant sur l'axe moteur du véhicule tracteur (3).

10. Dispositif selon la revendication 9, **caractérisé en ce que** des moyens aptes à détecter la masse pesant sur l'axe moteur dudit véhicule tracteur (3) sont constitués de transducteurs (45) agissant sur les suspensions pneumatiques (5) dudit axe moteur.

11. Dispositif selon la revendication 1, **caractérisé en ce que** lesdits actionneurs (17, 201) sont constitués de cylindres hydrauliques montés sur un cadre de support (37) fixé sur le véhicule tracteur (3).
